# EUROPEAN PATENT APPLICATION

(11) **EP 4 559 711 A1**
(43) Date of publication of application: **28.05.2025**
(21) Application number: 23211197.1
(22) Date of filing: 21.11.2023
(51) Int. Cl.: B60K 15/07, F17C 1/00

(54) **HYDROGEN TANK AND TANK RECEIVER FOR A HYDROGEN POWERED VEHICLE**

(71) Applicant: International Business Exchange Services ELEG Energy, 1000 Bruxelles (BE)
(72) Inventor: WU, Ying-Ho, 1000 Brussels (BE); YANG, Yi-Bin, 1000 Brussels (BE)
(74) Representative: Calysta NV

(57) **Abstract**

A tank (101, 201, 301, 401, 501, 601, 701) for hydrogen for a hydrogen powered vehicle, wherein the tank comprises: a hydrogen container (12), a balloon (5) arranged inside the hydrogen container, wherein the balloon divides an internal volume of the hydrogen container into a hydrogen volume (11) and a balloon volume (14), wherein the hydrogen container is configured to receive hydrogen in the hydrogen volume; the balloon is configured to expandable between a first volume and a second volume, wherein the first volume is smaller than the second volume, wherein the balloon is configured to be at the first volume after the hydrogen container is filled with hydrogen at a filling pressure; expands towards the second volume when hydrogen is emptied out of the hydrogen volume, thereby reducing the hydrogen volume.

## Description

The present invention relates to the field of hydrogen powered vehicle. The invention relates in particular to a tank for hydrogen, a tank receiver, and a method for refilling hydrogen.

Vehicles with traditional internal combustion engines based on fossil fuels have the disadvantage of emitting pollutants, e.g. CO₂, NOₓ, and SOₓ. The incorporation of alternative energy sources for vehicles has, therefore, increased in popularity of the recent years. This can e.g. include electric propulsion, but also hydrogen-based motors.

Hydrogen fuel does not produce pollutants. It is environmentally friendly. However, some practical issues in the use of hydrogen have been obstacles to be use this as an energy source for vehicles on a large scale.

For example, one practical issue is that it is difficult to use all hydrogen that is provided in a hydrogen tank. In general, the pressure of popular hydrogen containers are 35 MPa or 70 MPa. During use, the pressure of hydrogen container will be gradually reduced has hydrogen is emptied out of the container. According to ISO 19880-1 :2020, the minimum pressure for refuelling hydrogen is 0.5 MPa. When the pressure is below 0.5 MPa, the residual hydrogen cannot be used. As an approximation, when using the ideal gas law to calculate how much residual hydrogen in left in the container at an ambient temperature of 25 °C, this results in 20.3 g and 40.7 g under 35 MPa and 70 MPa for container of 49.7 L and 99.4 L, respectively.

Another practical issue is that the infrastructure for distributing and storing hydrogen is not commonly present yet. Even when hydrogen could be provided using trucks or boats, the issue remains that specialized equipment is required for fuelling vehicles with said hydrogen.

It is an object of the invention to overcome the disadvantages and/or practical issues of the prior art, or at least provide an alternative to the prior art. It is a particular object of the invention to provide a system that allows to empty more hydrogen from a hydrogen container. It is another particular object of the invention to provide a fast and flexible method for refuelling hydrogen.

One or more objects are achieved with a tank for hydrogen for a hydrogen powered vehicle, wherein the tank comprises
- a hydrogen container,
- a balloon arranged inside the hydrogen container, wherein the balloon divides an internal volume of the hydrogen container into a hydrogen volume and a balloon volume,
wherein
- the hydrogen container is configured to receive hydrogen in the hydrogen volume;
- the balloon is configured to expandable between a first volume and a second volume, wherein the first volume is smaller than the second volume, wherein the balloon is configured to
   - be at the first volume after the hydrogen container is filled with hydrogen at a filling pressure;
   - expands towards the second volume when hydrogen is emptied out of the hydrogen volume, thereby reducing the hydrogen volume.

The invention thus relates to a tank for hydrogen. Preferably, the tank is for a hydrogen powered vehicle. The vehicle can e.g. be an automobile, a bus, a truck, a motorcycle, a scooter. The vehicle comprises a hydrogen power source. The vehicle can e.g. comprise a hydrogen internal-combustion engine, although it is envisaged that the invention can also be applied to hydrogen powered vehicles comprising a fuel cell. Optionally, the vehicle comprises a secondary power source, e.g. an electric engine. The vehicle can thus be a hybrid vehicle, e.g. comprising a hydrogen internal-combustion engine or a fuel cell, and an electric engine.

It is in particular envisaged that the invention can be used for existing vehicles with an internal combustion engine (optionally (plug-in) hybrid vehicles), after relatively small modifications. Besides the engine, only the fossil fuel tank and pipe system need to be removed and replaced by components of the present invention, to enable the transition. Other components can be maintained as originally provided by the OEM.

The tank comprises a hydrogen container. The hydrogen container can be made of any suitable material for containing hydrogen at the required pressures. The hydrogen container can have any suitable shape or size, depending on the application.

A balloon is arranged inside the hydrogen container. Within this context, a balloon is an element that has a flexible outer wall which allows for expansion, depending on a pressure difference between an interior and an exterior of said outer wall. The flexible outer wall can be made of any suitable material, e.g. polyurethane. Although it is mentioned that the balloon is arranged inside the hydrogen container, it is possible that a (small part) of the balloon would be arranged outside the hydrogen container.

The balloon divides the internal volume of the hydrogen container in at least two volumes, being a hydrogen volume and a balloon volume. The hydrogen volume is the volume that is available for the hydrogen that can be filled into the tank, in particular into the hydrogen container. The balloon volume generally comprises the internal volume of the balloon and the flexible outer wall of the balloon.

When the hydrogen container is filled with hydrogen, the hydrogen is provided into the hydrogen volume at a filling pressure. The filling pressure can be as suitable and desired, but currently common filling pressures are e.g. 35 MPa or 70 MPa. The balloon is at a first volume, which generally is a relatively small volume. The relatively high filling pressure will exert a large force on the flexible outer wall of the balloon. This will cause the balloon volume to compress. As the balloon volume is compressed, the hydrogen volume increases. This allows to fill the hydrogen container with more hydrogen.

During use, hydrogen will be emptied out of the tank, to use said hydrogen as an energy source for the vehicle. While this happens, the pressure in the hydrogen volume reduces. At some point, the pressure in the hydrogen pressure drops to the point that the pressure exerted on the outer wall of the balloon by the hydrogen becomes smaller than the internal pressure of the balloon. This will cause the balloon, in particular the outer wall, to expand. As the balloon expands, the balloon volume increases, and the hydrogen volume decreases. The decrease of the hydrogen volume will cause the pressure of the hydrogen to increase or at least drop slower. The balloon will expand at least to a second volume, which is greater than the first volume. As such, it can be avoided that the hydrogen pressure becomes too low to use the hydrogen. More of the hydrogen can be used, and less residual hydrogen remains unused.

In embodiments, the balloon is configured to maintain the pressure in the hydrogen volume substantially constant while expanding from the first volume to the second volume.

In embodiments, the balloon is configured to be pressurized internally at a balloon pressure, wherein the balloon pressure is smaller than the filling pressure of the hydrogen. For example, the balloon can be pressurized at the balloon pressure when the hydrogen volume is free of hydrogen. When filling the balloon at the balloon pressure, the balloon can e.g. be at the second volume. Optionally, the balloon pressure is configured to be smaller than the filling pressure after being compressed to the first volume. The balloon can e.g. be configured to be compressed to the first volume when the tank is filled with hydrogen.

In embodiments, the balloon pressure is between 0.5 MPa and 10 MPa, e.g. between 4 MPa and 8 MPa, e.g. 6 MPa. In view of ISO 19880-1:2020, it may be advantageous if the balloon pressure is at least 0.5 MPa, to maintain the pressure of the hydrogen at at least 0.5 MPa. At the same time it may be advantageous that the balloon pressure is not too high, to ensure the first volume is as small as possible after having filled the tank with hydrogen.

In embodiments, the balloon is configured to be filled with a gas, e.g. at the balloon pressure. The gas can e.g. be hydrogen. The gas can e.g. be air. The gas can e.g. be an inert gas. The tank can e.g. comprise a balloon nozzle for filling the balloon with the gas.

In embodiments, the hydrogen container has an elongated shape. For example, the hydrogen container may have an oval cross section. A cross section taken in a direction perpendicular the direction with the oval cross section, the hydrogen container can e.g. have a round cross section.

In embodiments, the balloon is configured to expand in a longitudinal direction of the hydrogen container to expand from the first volume to the second volume.

In embodiments, the tank comprises a hydrogen nozzle for filling the hydrogen volume, and a balloon nozzle for filling the balloon, wherein the hydrogen nozzle and the balloon nozzle are arranged at opposite sides of the tank. This may be advantageous, since balloon is configured to expand/compress in opposite directions depending on whether the balloon is filled or the hydrogen volume is filled.

In embodiments, the tank comprises a hydrogen nozzle for filling the hydrogen volume, wherein the hydrogen nozzle is also configured for emptying the hydrogen volume for providing hydrogen to the hydrogen powered vehicle.

In embodiments, the tank comprises a pressure relieve valve. The pressure relieve valve advantageously protects the hydrogen container against overpressure. Optionally, the tank comprises a pressure relieve valve fluidly connected to the hydrogen volume. Optionally, the tank comprises a pressure relive valve fluidly connected to the balloon volume. A combination of two pressure relieve valves is possible as well, one connected to the hydrogen volume and one connected to the balloon volume.

In embodiments, the tank comprises a plurality of ribs extending from an external surface of the hydrogen container. The ribs may be advantageous for enhancing the strength of the hydrogen container. This may in particular be advantageous when the hydrogen container is relatively large, e.g. having a length in longitudinal direction of more than 20 cm.

The ribs can e.g. have a T-shape. The ribs can e.g. have a rectangular shape. The ribs can e.g. have a cross shape The ribs can e.g. have a shape of a ball with a rectangle.

When multiple tanks are arranged close to each other, the ribs of a first tank can be configured to be arranged mating with the ribs of a second tank. This advantageously allows to provide a compact stacking arrangement.

In embodiments, the tank is configured to be releasably mounted in a tank receiver of a hydrogen powered vehicle. Releasably mounted entails that the tank can be coupled and decoupled to the tank receiver by a consumer. This advantageously allows to replace the tank with a new tank when the tank is empty. The new tank is filled with hydrogen at the filling pressure. Thus, instead of refuelling in a similar way as is conventionally done with fossil fuels (filling the tank), a new hydrogen container filled with hydrogen is installed in the vehicle. This advantageously solves the problem that the infrastructure for a hydrogen network, as well as hydrogen fuelling equipment, are not commonly present. The tanks can be filled in a central location, e.g. a factory, and distributed as required.

In embodiments, the tank is configured to be installed in the tank receiver of the hydrogen powered vehicle when the hydrogen volume is filled with hydrogen at the filling pressure.

In embodiments, the tank is configured to be modularly arranged in the tank receiver. Thus, the tank can be replaced with another tank when desired, e.g. when being empty.

In embodiments, the tank comprises a hydrogen nozzle, wherein the hydrogen nozzle is configured to be arranged in a nozzle receiver of the tank receiver, wherein the hydrogen nozzle is configured to open a hydrogen connection to a piping system of the hydrogen powered vehicle once being arranged in the nozzle receiver. For example, the hydrogen nozzle may have an open position and a closed position, wherein the hydrogen nozzle is configured to be arranged from the closed position to the open position when being arranged into the nozzle receiver.

The invention may further relate to a tank receiver for receiving a tank comprising hydrogen. Optionally, the tank is a tank according to any of the embodiments described herein; however, neither the tank receiver, nor the tank, is limited thereto. Features explained herein with reference to the tank have the same meaning with respect to the tank receiver unless explicitly defined otherwise. Features explained with reference to the tank can be applied mutatis mutandis to the tank receiver to achieve the similar advantages, and vice versa.

In embodiments, the invention relates to a tank receiver for a hydrogen powered vehicle, comprising
- a tank holder for releasably holding a tank comprising hydrogen,
- a nozzle receiver for receiving a hydrogen nozzle of the tank, wherein the nozzle receiver is (configured to be) fluidly connected to a piping system, said piping system being configured to be fluidly connected to a hydrogen motor.

The tank receiver thus allows to releasably hold a tank comprising hydrogen. The tank can optionally be according to any of the embodiments described herein. Tank receiver can e.g. be configured to modularly receive the tank. Thus, the tank can be replaced with another tank when desired, e.g. when being empty.

The tank receiver comprises a nozzle receiver connected to a piping system. The piping system is configured to provide the hydrogen to a hydrogen motor. The hydrogen motor is arranged in the hydrogen powered vehicle. The hydrogen motor can e.g. be a hydrogen internal-combustion engine. The hydrogen motor can e.g. be a fuel cell. Optionally, the tank receiver comprises said piping system, or at least a part thereof.

In embodiments, the tank receiver comprises one or more belts for fastening the tank. The belt(s) can e.g. be configured to be arranged around the tank. The belt(s) can e.g. be made from a flexible material, e.g. a polymer, e.g. rubber. The belts can protect the tank against excessive shaking.

In embodiments, the tank receiver is configured to be arranged in the vehicle on an accessible location. For example, the tank receiver can be configured to be arranged in the trunk. Being on an accessible location, makes it easy for a user to arrange a tank in the tank receiver, and/or replace the tank with a new (full) tank.

In embodiments of the tank and/or the tank receiver, the hydrogen nozzle and/or the nozzle receiver are configured to make a thread connection. For example, the hydrogen nozzle and/or the nozzle receiver may be threaded. This has been found to be a practical and safe connection method, that a user can apply.

In embodiments of the tank and/or the tank receiver, the hydrogen nozzle and/or the nozzle receiver are configured to make a snap connection. This has been found to be a practical and safe connection method, that a user can apply.

In embodiments of the tank and/or the tank receiver, the hydrogen nozzle and/or the nozzle receiver are configured to open the hydrogen nozzle after being connected to each other. Thus, when the connection is made, the hydrogen nozzle is automatically opened. The hydrogen nozzle may e.g. comprise a rupturable element that is automatically ruptured when making the connection. The hydrogen nozzle may e.g. be configured be moved to an open position by the nozzle receiver when the connection is being made.

In embodiments, the invention relates to a modular tank system comprising a plurality of tank receivers according to any of the embodiments described herein, wherein each tank receiver is configured to receive a tank comprising hydrogen. The plurality of tank receivers allows to provide as many tanks as desired, e.g. depending on the distance that the vehicle will be driven.

The plurality of tank receivers can e.g. comprise at least two tank receivers, e.g. at least five, e.g. at least ten, e.g. at least twenty.

The plurality of tank receivers can e.g. be arranged in a grid, e.g. having a plurality of rows and a plurality of columns.

In embodiments, the nozzle receivers of the plurality of tank receivers are connected to a common piping system, said piping system being configured to be fluidly connected to a hydrogen motor.

In embodiments, the invention relates to a tank system comprising a tank according to any of the embodiments described herein, and a tank receiver according to any of the embodiments described herein for receiving the tank.

In embodiments, the invention relates to a vehicle comprising a tank and/or a tank receiver and/or a tank system according to any of the embodiments described herein. The vehicle may e.g. further comprise hydrogen power source. The vehicle can e.g. comprise a hydrogen internal-combustion engine, although it is envisaged that the invention can also be applied to hydrogen powered vehicles comprising a fuel cell. Optionally, the vehicle comprises a secondary power source, e.g. an electric engine. The vehicle can thus be a hybrid vehicle, e.g. comprising a hydrogen internal-combustion engine or a fuel cell, and an electric engine. Optionally, the vehicle is a transitioned which priorly had an internal combustion engine.

The invention further relates to one or more methods. Although the methods can be performed with the systems (tank, tank receiver, tank system, and/or vehicle) according to the invention; neither the systems, nor the methods are limited thereto. Features explained herein with reference to the systems have the same meaning with respect to the methods unless explicitly defined otherwise. Features explained with reference to the system can be applied mutatis mutandis to the methods to achieve the similar advantages, and vice versa.

One or more objects of the invention can be achieved with a method for refilling hydrogen for a hydrogen powered vehicle, wherein the method comprises a step of using one or more of a tank, tank receiver, tank system, and/or vehicle according to any of the embodiments described herein.

One or more objects of the invention can be achieved with a method for refilling hydrogen for a hydrogen powered vehicle, comprising the steps of:
- arranging one or more tanks comprising hydrogen in one or more tank receivers, said tank receivers being arranged in the vehicle,
- connecting the one or more tanks to a piping system, said piping system being fluidly connected to a hydrogen motor.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig 1a schematically illustrates a tank according to a first embodiment, the tank having a balloon, wherein the balloon is at a second volume;
Fig. 1b schematically illustrates the tank, wherein the balloon is at a first volume;
Fig. 2a schematically illustrates a cross section of the tank being arranged in a tank receiver;
Fig. 2b schematically illustrates a belt of the tank receiver;
Fig. 2c schematically illustrates the tank receiver in side view;
Fig. 2d schematically illustrates the tank receiver in top view;
Fig. 2e schematically illustrates a modular tank system comprising a plurality of tank receivers;
Fig. 3a schematically illustrates the tank in a second embodiment with the balloon being at a second volume;
Fig. 3b schematically illustrates the tank in the second embodiment with the balloon being at a first volume;
Fig. 4a schematically illustrates a cross section of a tank receiver in a second embodiment;
Fig. 4b schematically illustrates belts of the tank receiver;
Fig. 4c schematically illustrates the tank receiver in side view;
Fig. 5a-5e schematically illustrates ribs in different embodiments.

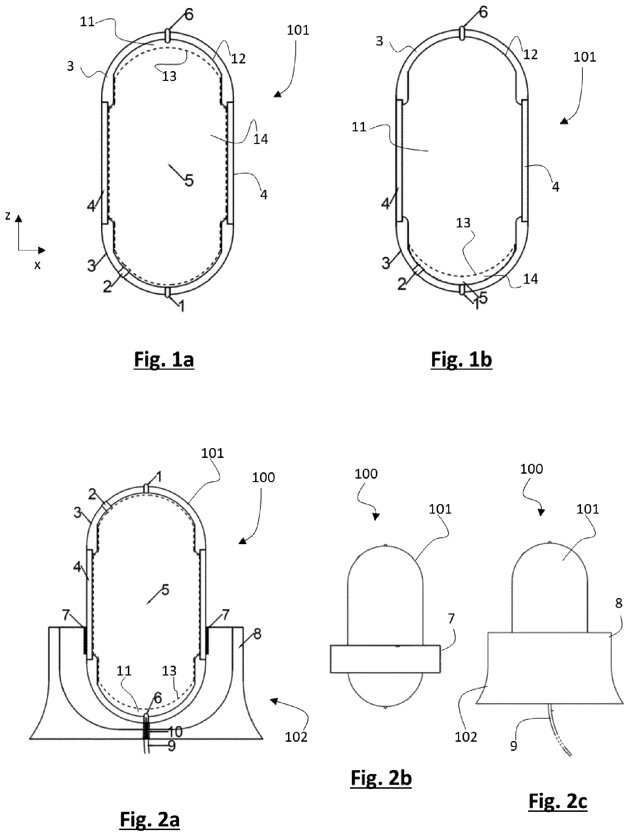

Fig. 1a schematically illustrates a tank 101 in a first embodiment. The tank 101 is configured to receive be filled with hydrogen, as explained further below. The tank 101 can be arranged modularly in a hydrogen powered vehicle. The hydrogen can be provided to a hydrogen internal-combustion engine, for providing a propulsion force to the vehicle. The vehicle can e.g. be an automobile, a bus, a truck, a motorcycle, a scooter.

Fig. 1a schematically illustrates a cross section of the tank 101, such that internal components are visible. The tank 101 comprises a hydrogen container 12. In this example, the hydrogen container 12 is formed by two curved end covers 3 and an intermediate wall arranged between the covers 3. The hydrogen container 12 has an elongated shape in this cross section, taken in a longitudinal direction z. In a radial direction x, the cross section would be circular.

A balloon 5 is arranged inside the hydrogen container 12. The balloon 5 comprises an outer wall 13 which is flexible. The outer wall 13 is indicated by a dotted line in the figures. The outer wall 13 allows for expansion or compression of the balloon 5. The flexible outer wall 13 can be made of any suitable material, e.g. polyurethane.

The balloon 5 divides an internal volume of the hydrogen container into a hydrogen volume 11 and a balloon volume 14. The hydrogen volume 11 is configured to receive hydrogen. The balloon volume 14 corresponds to the interior volume of the balloon 5 and the outer wall 13 of the balloon.

The tank 101 comprises a balloon nozzle 1, which is at the bottom of the hydrogen tank 12 in the arrangement shown in fig. 1a. The balloon 5 can be filled with a gas through the balloon nozzle 1. For example, the balloon 5 can be filled with hydrogen, priorly to filling the hydrogen volume. The balloon 5 can e.g. be filled with the gas at a balloon pressure. The balloon pressure can e.g. between 0.5-10 MPa, in the shown example e.g. 6 MPa. While the balloon 5 is being filled, the balloon volume 14 will expand from a first volume to a second volume. In fig. 1a, the balloon 5 is at the balloon pressure, and the balloon volume 14 is at the second volume. It can be seen that the balloon volume 14 occupies almost all of internal volume of the hydrogen container 12. The hydrogen volume 11 is rather small in this situation.

After filling the balloon 5 to the balloon pressure, hydrogen can be filled into the hydrogen volume. For this, the tank 101 comprises a hydrogen nozzle 6. It can be seen that the hydrogen nozzle 6 and the balloon nozzle 1 are at opposite sides of the hydrogen tank 12. This is advantageous to allow access to the hydrogen volume 11 or balloon volume 14, respectively.

The hydrogen is filled into hydrogen volume 11 until the hydrogen volume is at a filling pressure. The filling pressure is larger than the balloon pressure. The filling pressure can e.g. be 35 or 70 MPa. During the filling of the hydrogen volume 11, the pressure in said hydrogen volume 11 will exceed the pressure in the balloon volume 14. The difference in pressure will cause the balloon 5 to compress, whereby the outer wall 13 of the balloon 5 is moved in longitudinal direction (-z) of the hydrogen container 12. Eventually, the balloon volume 5 is reduced to a first volume, shown in fig. 1b. When in the first volume, the pressure inside the balloon 5 is higher than the balloon pressure that was present in the second volume.

The hydrogen container 12 further comprises a pressure relieve valve 2. The pressure relieve valve 2 protects against overpressure.

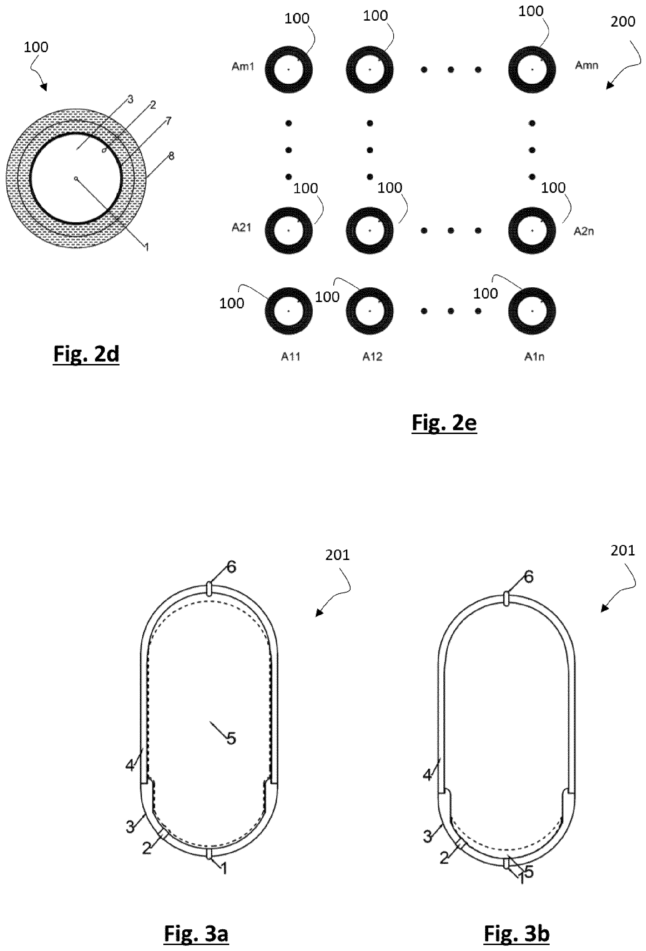

Fig. 2a-2e illustrates a tank system 100 having the tank 101 and a tank receiver 102. The tank receiver 102 comprises a tank support 8 with a curved opening. The shape of said opening is configured to be mating with the shape of the tank 101. The tank 101 can thus be arranged into the tank support 8. The tank receiver 102 further comprises a belt 7 (also visible in fig. 2b) which can be arranged around the tank 101. The belt 7 can e.g. be made from rubber. The belt 7 protects the tank 101 against shaking or vibrations.

Fig. 2a illustrates that the hydrogen nozzle 6 of the tank 101 is arranged in a nozzle receiver 10 of the tank receiver 102. The hydrogen nozzle 6 and the nozzle receiver 10 can e.g. make a threaded connection or a snap connection. During the making of said connection, the hydrogen nozzle 6 is opened. A fluidic connection is made between the hydrogen volume 11 in the hydrogen container, and a piping system 9. Although not illustrated in these figures, the piping system 9 can further downstream be connected to the hydrogen internal-combustion engine.

In the shown example, a single hydrogen nozzle 6 is used for filling and emptying the hydrogen from the hydrogen container 12. This is possible, because the tank 101 is filled remotely. The tank 101 can e.g. be filled in a factory by specialized personnel, thereby ensuring safety. When a user needs hydrogen for his vehicle, he can take/purchase a filled tank 101. The tank receiver 102 is arranged in the vehicle on an accessible location, e.g. in the trunk. The user can then arrange the tank 101 into the tank receiver 102. This can easily and safely be done by means of the thread or snap connection of the hydrogen nozzle 6 and the nozzle receiver 10.

When a full tank 101 is arranged into the tank receiver 102, the pressure in the hydrogen volume 11 is still at the filling pressure (possibly slightly deviating in function of temperature differences). The balloon 5 is at the first volume. During use, hydrogen is taken out of the hydrogen volume 11 to be used as energy source for the vehicle. Slowly, the pressure in the hydrogen volume 11 decreases. At some point, the pressure in the hydrogen volume 11 will fall below the pressure in the balloon volume 14. This will cause the outer wall 13 of the balloon 5 to move in the longitudinal direction of the hydrogen tank 12. Thus, the balloon volume 14 increases and the hydrogen volume 11 decreases. The pressure in the balloon volume 14 decreases and the pressure in the hydrogen volume 11 increases. This will continue until the balloon 5 has expanded from the first volume to the second volume. In the situation illustrated in fig. 2a, the balloon 5 has expanded to the second volume. Preferably, the expansion of the balloon 5 maintains the pressure in the hydrogen volume 11 substantially constant, at least during said expansion.

The expansion of the balloon 5 has the advantageous effect that the pressure in the hydrogen volume 11 can be avoided from dropping too low. If said pressure would become too low, it may not be possible/allowed to further empty the hydrogen into the piping system 9. Residual hydrogen would therefore be present, resulting in inefficiency. This is reduced with the system shown in the figures.

Fig. 2e illustrates a modular tank system 200 in top view. A plurality of tank systems 100 have been provided. In particular, a modular tank system 200 with a plurality of tank receivers can be arranged in a vehicle. In this example, the tank receivers are arranged in a grid having m rows and n columns. The number corresponding with m and n may depend on the size of the tanks and the required/desired amount of hydrogen for the vehicle. The modular tank system 200 is arranged in the vehicle on an accessible location, for example in the trunk.

Since the tanks are being filled remotely in a factory, the user can not choose how far he fills the tank when refueling. A user would obviously like to use as much of the hydrogen in the tank as possible. However, at the same time, if only a single tank is provided, a user cannot drive until the tank is completely empty, because then the vehicle cannot drive to a location to buy a full tank. By providing a modular tank system with a plurality of tank receivers, this problem can be resolved. When some of the tanks are empty, a user can already replace those with full tanks. As such, it can always be ensured to use as much hydrogen as possible. In addition, a user has the flexibility to refill with the as many tanks as desired at any given moment.

The different tank receivers shown in fig. 2e may be connected to a common pipe system. The common pipe system can in turn be fluidly connected to the hydrogen internal combustion engine.

Fig. 3a and 3b show a second embodiment of a tank 201. Fig. 3a shows the balloon 5 at the second volume, and fig. 3b shows the balloon at the first volume. For the sake of efficiency, not all features have been explicitly indicated in fig. 3a-3b. The difference with the embodiment shown in figs. 1a-2e, is that in fig. 3a-3b the hydrogen container 12 is formed by a single curved end covers 3 and a wall 4. The wall 4 can e.g. be an extruded tube.

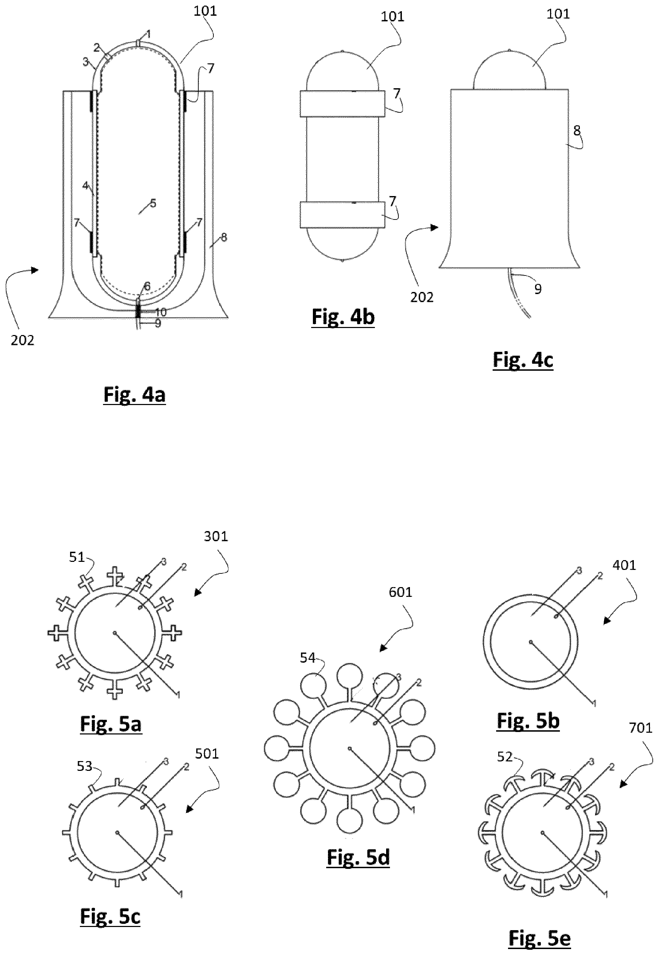

Fig. 4a-4c illustrate a second embodiment of the tank receiver 202. In this embodiment, the tanks support 8 extends further than in the embodiment shown in fig. 2a-2. This may be advantageous to support the tank 101. In addition, the tank receiver 202 in fig. 4a-4c comprises two belts 7 for holding the tank 101.

Fig. 5a-5e illustrate that in some embodiments, ribs 51-54 can be provided. The ribs 51-54 extend radially outward from an external surface of the tank. The ribs 51-54 enhance the strength of the tank. When multiple tanks are arranged close to each other, the ribs 51-54 can mate with each other for arranging the tanks in a stacked arrangement.

In the embodiment shown in fig. 5a, the tank 301 has ribs 51 that have a cross-shape. In the embodiment shown in fig. 5b, the tank 401 is provided without ribs. In the embodiment shown in fig. 5c, the tank 501 has ribs 53 that have a rectangular shape. In the embodiment shown in fig. 5d, the tank 601 has ribs 54 that have a circle-shape. In the embodiment shown in fig. 5e, the tank 701 has ribs 52 that have a T-shape.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A tank (101, 201, 301, 401, 501, 601, 701) for hydrogen for a hydrogen powered vehicle, wherein the tank comprises
• a hydrogen container (12),
• a balloon (5) arranged inside the hydrogen container, wherein the balloon divides an internal volume of the hydrogen container into a hydrogen volume (11) and a balloon volume (14),
wherein
• the hydrogen container is configured to receive hydrogen in the hydrogen volume;
• the balloon is configured to expandable between a first volume and a second volume, wherein the first volume is smaller than the second volume, wherein the balloon is configured to
• be at the first volume after the hydrogen container is filled with hydrogen at a filling pressure;
• expands towards the second volume when hydrogen is emptied out of the hydrogen volume, thereby reducing the hydrogen volume.

2. The tank according to claim 1, wherein the balloon is configured to be pressurized internally at a balloon pressure, wherein the balloon pressure is smaller than the filling pressure of the hydrogen.

3. The tank according to claim 2, wherein the balloon pressure is between 0.5 MPa and 10 MPa, e.g. 6 MPa.

4. The tank according to any of the preceding claims, wherein the hydrogen container has an elongated shape.

5. The tank according to any of the preceding claims, wherein the tank comprises a hydrogen nozzle (6) for filling the hydrogen volume, and a balloon nozzle (1) for filling the balloon, wherein the hydrogen nozzle and the balloon nozzle are arranged at opposite sides of the tank.

6. The tank according to any of the preceding claims, wherein the tank comprises a pressure relieve valve (2).

7. The tank according to any of the preceding claims, wherein the tank comprises a plurality of ribs extending from an external surface of the hydrogen container.

8. The tank according to any of the preceding claims, wherein the tank is configured to be releasably mounted in a tank receiver (102, 202) of a hydrogen powered vehicle.

9. The tank according to the preceding claim, wherein the tank comprises a hydrogen nozzle (6), wherein the hydrogen nozzle is configured to be arranged in a nozzle receiver (10) of the tank receiver, wherein the hydrogen nozzle is configured to open a hydrogen connection to a piping system (9) of the hydrogen powered vehicle once being arranged in the nozzle receiver.

10. A tank receiver (102, 202) for a hydrogen powered vehicle, comprising
• a tank holder (8) for releasably holding a tank (101, 201, 301, 401, 501, 601, 701) comprising hydrogen, wherein optionally the tank is according to any of the preceding claims
• a nozzle receiver (10) for receiving a hydrogen nozzle of the tank, wherein the nozzle receiver is fluidly connected to a piping system (9), said piping system being configured to be fluidly connected to a hydrogen motor.

11. The tank receiver according to the preceding claim, further comprising one or more belts (7) for fastening the tank.

12. A modular tank system (200) comprising a plurality of tank receivers (102, 202) according to any of the claims 10-11, wherein each tank receiver is configured to receive a tank (101, 201, 301, 401, 501, 601, 701) comprising hydrogen, wherein the nozzle receivers of the plurality of tank receivers are connected to a common piping system, said piping system being configured to be fluidly connected to a hydrogen motor.

13. The tank according to any of the preceding claims or the tank receiver according to any of the preceding claims, wherein the hydrogen nozzle and/or the nozzle receiver are configured to make a thread connection or a snap connection.

14. A tank system comprising a tank according to any of preceding the claims, and a tank receiver according to any of the preceding claims for receiving the tank.

15. A method for refilling hydrogen for a hydrogen powered vehicle, comprising the steps of:
• arranging one or more tanks comprising hydrogen in one or more tank receivers, said tank receivers being arranged in the vehicle,
• connecting the one or more tanks to a piping system, said piping system being fluidly connected to a hydrogen motor.
